# EUROPEAN PATENT APPLICATION

(11) **EP 3 543 328 A1**
(43) Date of publication of application: **25.09.2019**
(21) Application number: 17872233.6
(22) Date of filing: 08.11.2017
(51) Int. Cl.: C12G 3/04, A23L 2/00, C12C 5/02

(54) **BEER-LIKE BEVERAGE**

(30) Priority: 21.11.2016 JP 2016226053
(71) Applicant: Asahi Group Holdings, Ltd., Tokyo 130-8602 (JP); Asahi Breweries, Ltd., Tokyo 130-8602 (JP)
(72) Inventor: OHASHI, Takuya, Moriya-shi Ibaraki 302-0106 (JP); TAKISHITA, Seiichi, Moriya-shi Ibaraki 302-0106 (JP); NISHIZUKA, Taichi, Moriya-shi Ibaraki 302-0106 (JP)
(74) Representative: Müller-Boré & Partner Patentanwälte PartG mbB
(86) International application number: PCT/JP2017/040253
(87) International publication number: WO 2018/092656

(57) **Abstract**

The problem of the invention is to provide a beer-like beverage with an increased resistance to the throat, though the amount of digestible-carbohydrates is reduced and it is a beer taste beverage with a reduced amount of digestible-carbohydrates. The means for solving the problem is a beer-like beverage wherein the amount of ferulic acid is 0.4-10 ppm (w/v) in concentration, the amount of digestible-carbohydrates is 2.0 g/100 mL or less in concentration, and the amount of alcohol is 10% (v/v) or less in concentration.

## Description

### Technical Field

The present invention relates to a beer-like beverage, and in particular relates to a beer-like beverage in which the amount of digestible-carbohydrates has been reduced.

### Background Art

"Beer" refers to a beverage obtained by fermenting malt, hops, water and the like as raw materials. "Beer-like" means that taste and flavor are similar to such an extent that they remind us of beer. "Alcoholic beverage" refers to a beverage containing ethyl alcohol in a substantial amount. In the Japanese Liquor Law, beverages which have an alcohol content by volume of 1% or more are regarded as liquors. These liquors are one example of alcoholic beverages. In the present specification, the term "alcohol" means ethyl alcohol.

Consumers' health consciousness in recent years has increased demand for low digestible-carbohydrate beer-like beverages. However, digestible-carbohydrates are one of the components that produce richness. In a beer-like beverage having a reduced amount of digestible-carbohydrates, there are fewer components that produce richness. Therefore, low digestible-carbohydrate beers have the following problem. That is, they are inferior to the general beers in a feeling of fullness or a feeling of catching, the throat, in particular the front portion of the throat (i.e., soft palate, the vicinity of uvula or the rear of the tongue) feels when swallowing nutrients. In the present specification, a feeling of fullness, or a feeling of catching that the front of the throat feels when swallowing nutrients is referred to as "resistance to the throat".

Patent Document 1 discloses a zero purine body, zero digestible-carbohydrate beer taste fermented alcoholic beverage with drink fulfilment and sharpness, which are similar to those felt when one drinks beer, and a method of producing the same. The beer taste fermented alcoholic beverage of Patent Document 1 is obtained by fermenting a pre-fermentation solution comprising a carbon source, a nitrogen source and a water-soluble dietary fiber.

Since zero purine body, zero digestible-carbohydrate beer taste fermented alcoholic beverages have fewer nutrient components that beer would intrinsically have, they lack the resistance to the throat. Water-soluble dietary fiber is a material poor in.taste. Even if it is included in the pre-fermentation solution, it is not possible to increase flavors corresponding to the respective nutrient components. Therefore, the beer taste fermented alcoholic beverage of Patent Document 1 still lacks the resistance to the throat. That is, the resistance to the throat is a different feeling from the drink fulfilment as referred to in Patent Document 1.

Patent Document 2 discloses a beer, a *happoshu* and the like, which contain high amounts of free ferulic acid, and in which production of 4-vinyl guaiacol (4-VG) is suppressed, thereby keeping a flavor balance of fermented alcoholic beverages. In fermented alcoholic beverages of Patent Document 2, free ferulic acid is contained in high amounts, which imparts functionalities such as in-vivo antioxidative action to the beverages, and the production of 4-vinyl guaiacol (4-VG) is suppressed in order to keep a flavor balance of the fermented alcoholic beverages. That is, Patent Document 2 does not disclose that free ferulic acid contributes to improvements in flavor and drink fulfilment.

Patent Document 3 discloses as follows regarding a non-fermented beer flavored drink. There are problems in that it is inferior in drink fulfilment and stimulation to the throat, and sharpness after drinking, compared with general beers. These problems are solved by including a specific amount of a polymeric saccharide and a sweet-taste substance. Patent Document 3 discloses starch decomposition products such as indigestible dextrin as the polymeric saccharide. It also discloses that the lower limit of the amount of the polymeric saccharide is 8 mg/mL.

The polymeric saccharide is a high-molecular compound, and when it is contained in an appropriate amount, fluidity (rheology) of the solution is changed. It is considered that the beer taste drink of Patent Document 3 containing a polymeric saccharide in the above amount is lowered in rheology, and it becomes hard to pass through the throat when swallowing. As a result, it is considered that the beer taste drink of Patent Document 3 achieves drink fulfilment and stimulation to the throat.

A feeling of drink fulfilment and stimulation to the throat in the non-fermented beer taste drink of Patent Document 3 is a sensation mainly perceived in the rear of the throat, roughly in the vicinity of the Adam's apple. This is a phenomenon showing that a beer-like drink containing a polymeric saccharide becomes hard to pass through the throat when swallowing.

### Prior Art Documents

### Patent Documents

Patent Document 1: JP 2016-116454 A
Patent Document 2: JP 2010-148485 A
Patent Document 3: WO 2013/080354 A

### Summary of Invention

### Problem to be Solved by Invention

The present invention solves the above problems, and an object thereof is to provide a beer-like beverage with an increased resistance to the throat, though it is a beer taste beverage with a reduced amount of digestible-carbohydrates.

### Means for Solving Problem

The present invention provides a beer-like beverage in which the amount of ferulic acid is 0.4-10 ppm (w/v) in concentration, the amount of carbohydrates is 2.0 g/100 mL or less in concentration, and the amount of alcohol is 10% (v/v) or less in concentration.

In one embodiment, the amount of ferulic acid is 0.4-3.2 ppm in concentration.

In one embodiment, the amount of carbohydrates is less than 0.5 g/100 mL.

In one embodiment, the above beer-like beverage includes a component obtained from grain or a component obtained from malt.

In one embodiment, the above beer-like beverage is a beer-like refreshing beverage substantially not containing alcohol.

In one embodiment, the above beer-like beverage includes a component obtained from a fermented product of fermentation raw materials.

In one embodiment, the amount of alcohol in the above beer-like beverage is 3% or more in concentration.

### Effect of Invention

By the present invention, a beer-like beverage showing the resistance to the throat was provided, though it is a beer taste beverage with a reduced amount of carbohydrates.

### Description of Embodiments

The beer-like beverage refers to a beverage which is similar in its taste and flavor to a beer to such an extent that it reminds us of beer. The beer-like beverage may contain or may not contain alcohol. The beer-like beverage may be produced using as raw materials malt, grain and hops, or may be produced not using them. Furthermore, the beer-like beverage may be produced through a fermentation process, or may be produced not through the fermentation process.

The beer-like beverage of the present invention may be a beer-like refreshing beverage substantially not containing alcohol or may be a beer-like alcoholic beverage substantially containing alcohol. When it is a beer-like alcoholic beverage, the amount of alcohol in the beer-like beverage of the present invention is preferably 10% (v/v) or less, preferably 3-9% in concentration, and more preferably 5-8% in concentration. When it contains alcohol, the resistance to the throat is more easily improved.

The amount of alcohol in the beer-like beverage can be adjusted by a method which has conventionally been known. For example, when starch raw material and sugar raw material are fermented to produce a beer-like beverage, the amount of alcohol in the beer-like beverage may be adjusted by contriving brewing conditions such as increasing or decreasing the amounts of the starch raw material and the sugar raw material to be used. The amount of alcohol in the beer-like beverage may also be adjusted by adding alcohols, drinking water or carbonated water to the beer-like beverage.

The alcohols added to the beer-like beverage are not particularly limited as long as they contain alcohol, and they may be raw material alcohol, or may be distilled liquors such as spirits, whisky, brandy, vodka, rum, tequila, gin, and *shochu.* The alcohols used in the present invention are preferably raw material alcohol, and distilled liquors such as vodka having a low characteristic flavor, since they can increase the alcohol concentration without affecting the taste of the beer-like beverage very much, and more preferably raw material alcohol.

The beer-like beverage of the present invention is a beer-like beverage with a reduced amount of carbohydrates. The amount of carbohydrates in the beer-like beverage of the present invention is 2.0 g/100 mL or less in concentration. When the amount of carbohydrates is more than 2.0 g/100 mL in concentration, richness comes out. Therefore, it becomes less necessary to improve the resistance to the throat. Furthermore, when the amount of carbohydrates is more than 2.0 g/100 mL in concentration, it cannot be said to be low carbohydrate, so that the consumers' demand cannot be met.

The amount of carbohydrates in the beer-like beverage of the present invention is preferably 1.0 g/100 mL or less in concentration, and more preferably less than 0.5 g/100 mL in concentration. The amount of carbohydrates in the beer-like beverage can be adjusted by a method which has conventionally been known. The amount of carbohydrates in the beer-like beverage can be determined by analyzing it according to a method described in Food Labeling Standards, Notification No. 139 on March 30, 2015 (JAPAN Consumer Agency).

The beer-like beverage of the present invention can be produced, for example, by a method described below. A fermented beverage in the present specification means a beverage produced through a fermentation process of fermenting fermentation raw materials by yeast regardless of the kind of fermentation raw material.

The fermentation raw materials refer to raw materials of a beer-like beverage which can be fermented using yeast. In the fermentation raw materials, malt, grain and auxiliary materials are included. The auxiliary materials refer to raw materials other than malt and grain. Examples of the auxiliary materials include, for example, starch raw materials such as barley, wheat, corn starch, corn grits, rice and Karyan, and sugar raw materials such as liquid sugar and sugar. The liquid sugar is a product produced by decomposing, and saccharifying starch using an acid or a diastatic enzyme, and glucose, maltose, maltotriose and the like are mainly included.

A fermented beer-like beverage means a beverage produced through a fermentation process, and having a likeness to beer. Specifically, beer, *happoshu* and the like are given. The beer-like alcoholic beverage in the present invention refers to a beverage which is similar in its taste and flavor to a beer to such an extent that it reminds us of beer, and contains alcohol in a substantial amount. The beer-like alcoholic beverage does not have to be produced using malt, grain, and hops as raw materials, or does not have to be produced by fermentation, either.

A method of producing the fermented beverage has a fermentation process of inoculating yeast into a fermentation raw material liquid to ferment it. The alcohols can also be added to the fermentation raw material liquid before inoculation with yeast or the fermentation liquid during the fermentation process.

The amount of alcohols added to the fermentation raw material liquid and the like can be adjusted as needed, considering the intended product quality, in particular the intended alcohol concentration of the fermented beverage that is a final product. For example, the amount of alcohols added to the fermentation raw material liquid is preferably an amount in which the added alcohols increase the alcohol concentration of a fermented beverage to be produced by 1 vol% or more, and more preferably an amount which increases the alcohol concentration of the fermented beverage to be produced by 1-4 vol%.

The alcohols added to the fermented raw material liquid and the like are not particularly limited as long as they contain alcohol. For example, they may be raw material alcohol or may be distilled liquors such as spirits, whiskey, brandy, vodka, ram, tequila, gin and *shochu.* The alcohols used in the method of producing a fermented beverage according to the present invention are preferably raw material alcohol, and distilled liquors such as vodka having a low characteristic flavor, since they can increase the alcohol concentration without affecting the taste of the fermented beverage very much, and more preferably raw material alcohol.

In the method of producing a fermented beverage, the timing of adding the alcohols may be any time after a charging process. When the alcohols are added in the fermentation process, it is preferred that the fermentation proceeds sufficiently even after the addition of the alcohols since the added alcohols can be sufficiently blended into the fermentation liquid. Specifically, for example, the alcohols are preferably added so that the alcohol concentration of the fermentation liquid after addition of the alcohols increases by 1 volume or more than that of the fermentation liquid at the time of addition of the alcohols until completion of fermentation.

When the alcohols are added before the start of fermentation, after the alcohols have been added to and mixed with the fermentation raw material liquid, yeast may be inoculated thereinto. Alternatively, after yeast has been inoculated into the fermentation raw material liquid, the alcohols may be added to and mixed therewith, followed by the start of fermentation. Furthermore, the fermentation raw material liquid may be prepared by separating into a first liquid into which yeast is inoculated and a second liquid with which the alcohols are mixed, in advance, and mixed, followed by the start of fermentation. The first liquid containing the fermentation raw materials and the second liquid.containing the fermentation raw materials and the alcohols are separately prepared. After yeast has been inoculated into the first liquid, a mixture obtained by mixing the first liquid and the second liquid containing the alcohols (fermentation raw material liquid into which yeast has been inoculated) is fermented.

In order to make it easier to mix the first liquid and the second liquid with each other, they are preferably prepared so that their specific gravities are substantially identical to each other. For example, the first liquid and the second liquid are preferably prepared so that a difference in specific gravity value between them is 0.017 or less, and more preferably 0.010 or less. It is also preferred that the specific gravity values of the first liquid and the second liquid are both in the range of 1.030 to 1.047.

In the specification of the present application, specific gravity values of liquids and fermentation raw material liquids are values measured at a liquid temperature of 20°C by a natural oscillation frequency measuring type density/specific gravity meter (e.g., "DA-510" manufactured by KYOTO ELECTRONICS MANUFACTURING CO., LTD.)

Each of the first liquid and the second liquid may be prepared by separating into two or more portions. When the first liquid is prepared by separating into two or more portions, yeast is inoculated into each liquid. When the first liquid and the second liquid are each prepared by separating into two or more portions, the first liquid and the second liquid are preferably charged in a fermentation tank alternatingly. By alternatingly charging the first liquid and the second liquid which have been prepared by separating into two or more portions, both of them are easily mixed, thus becoming a homogeneous fermentation raw material liquid more quickly.

When the alcohols are added to the fermentation raw material liquid before inoculating yeast thereinto or the fermentation liquid during fermentation, fermentation stops earlier, which may result in insufficient fermentation. In the fermentation process, sufficient fermentation can be achieved by bubbling gas into the fermentation liquid even if the alcohols are added to the fermentation raw material liquid or the fermentation liquid during fermentation.

Although the gas used for bubbling is not particularly limited as long as it is gas, carbon dioxide gas, and nitrogen gas are preferred. Since the dissolved oxygen amount in the fermentation liquid can also be reduced by bubbling with carbon dioxide gas or nitrogen gas, the dissolved oxygen amount in a fermented beverage that is finally produced can also be reduced. That is, sufficient fermentation can be achieved by gas bubbling even if the alcohols are added, and in addition, a fermented beverage with high preservation stability and suppressed flavor deterioration can be produced.

Although conditions for bubbling can be determined as needed, considering the volume and the size of a container in which bubbling is performed, and the amount of the fermentation liquid included inside and the like, it is preferably performed under conditions where its flow rate is constant for a predetermined time. It is also preferably performed under conditions where foaming of the fermentation liquid is prevented by excessive bubbling. Specifically, for example, it can be performed at a flow rate of 2-55 L/min, preferably 2-20 L/min, per 3000 L of the fermentation liquid.

Since the dissolved oxygen in the fermentation liquid is reduced by gas bubbling, gas bubbling is preferably started after yeast in the fermentation liquid growth has stopped. The extent of yeast growth can be learned using as an index the floating yeast count in the fermentation liquid. The floating yeast count in the fermentation liquid increases during a period of active yeast growth, whereas after yeast growth has stopped, yeast settles down, and the floating yeast count in the fermentation liquid is also reduced. Therefore, gas bubbling into the fermentation liquid is preferably started after measuring the floating yeast count with time and confirming a peak of the floating yeast count.

When the fermented beverage produced by the method of producing a fermented beverage is a fermented beer-like beverage, it can be produced in the same manner as in a general fermented beer-like beverage except that the alcohols are added to the fermentation raw material liquid before inoculation with yeast or the fermentation liquid during the fermentation process. The general fermented beer-like beverage can be produced through the processes of charging (preparation of a fermentation raw material liquid), fermentation, maturation, and filtration.

First, as the charging process (fermentation raw material liquid preparation process), fermentation raw material liquid is prepared from one or more selected from the group consisting of grain raw materials and sugar type raw materials. Specifically, a mixture comprising at least one of grain raw materials and sugar type raw materials, and raw material water is prepared, and warmed to saccharify starch such as grain raw material. As a raw material of a sugar solution, only grain raw material may be used, or only sugar type raw material may be used, or both may be used by mixing them. Examples of the grain raw materials include, for example, grains such as barley, wheat and malts thereof, rice, corn, beans such as soybeans, potatoes and the like. Although the grain raw material can also be used as grain syrup, grain extract and the like, it is preferably used as a grain crushed product obtained by subjecting it to crushing treatment. The crushing treatment of grains can be performed by a conventional method. Grain crushed products may be those which have been subjected to treatment commonly performed before or after the crushing treatment, such as a malt crushed product, corn starch, and corn grits. The grain crushed product used is preferably a malt crushed product. Using the malt crushed product can produce a fermented beer-like alcoholic beverage giving a clearer likeness to beer. Any malt crushed product may be used as long as it is obtained by germinating barley, for example two-rowed barley, by a conventional method, drying it and crushing it to a predetermined grain size. One grain raw material or a mixture obtained by mixing a plurality of grain raw materials may serve as the grain raw material used in the present invention. For example, a malt crushed product may be used as a main raw material, and a crushed product of rice or corn may be used as an auxiliary material. Examples of the sugar type raw materials include, for example, sugars such as liquid sugar.

Auxiliary materials other than the grain raw materials and the like and water may be added to the mixture. Examples of the auxiliary materials include, for example, hops, dietary fiber, yeast extract, fruit juice, a bittering agent, a colorant, a herb, a flavoring and the like. Also, as necessary, diastatic enzymes such as α-amylase, glucoamylase and pullanase, and an enzyme drug such as protease can be added.

Saccharification treatment is carried out using an enzyme derived from grain raw material and the like, or an enzyme separately added. The time and temperature during the saccharification treatment is adjusted as needed considering the kind of grain raw material and the like used, percentage of grain raw materials accounting for total fermentation raw materials, kind of enzyme added and amount of the mixture, quality of the intended fermented beer-like alcoholic beverage and the like. For example, the saccharification treatment can be carried out by a conventional method such as holding a mixture containing the grain raw material and the like at 30-70°C for 20-90 minutes.

By boiling a sugar solution obtained after the saccharification treatment, syrup (a boiled product of the sugar solution) can be prepared. It is preferred that the sugar solution is filtered before boiling treatment, and that the resultant filtrate is subjected to the boiling treatment. In place of the filtrate of this sugar solution, malt extract added with warm water may also be used, followed by boiling. The boiling method and its conditions can be determined as needed.

A fermented beer-like alcoholic beverage with the desired flavor can be produced by adding a herb and the like as needed before the boiling treatment or during the boiling treatment. In particular, hops are preferably added before the boiling treatment or during the boiling treatment. The boiling treatment in the presence of hops can efficiently extract a flavor/aroma component. The amount of hops to be added, addition mode thereof (for example, added in several times and the like), and boiling conditions thereof can be determined as needed.

After the charging process and before the fermentation process, lees such as proteins produced by precipitation are preferably removed from the prepared syrup. Although the removal of lees may be performed by any solid-liquid separation treatment, generally, lees are removed using a tank called a whirlpool. The temperature of the syrup at this time may be 15°C or higher, and it is typically performed at a temperature of about 50-100°C. The syrup (filtrate) after the lees have been removed is cooled to an appropriate fermentation temperature by a plate cooler and the like. The syrup after the lees have been removed serves as a fermentation raw material liquid.

Next, as the fermentation process, yeast is inoculated into the cooled fermentation raw material liquid to carry out fermentation. The cooled fermentation raw material liquid may be provided to the fermentation process directly, or may be provided to the fermentation process after having been adjusted to the desired extract concentration. The yeast used for the fermentation is not particularly limited, and it is usually selected and used as needed from among those yeasts which are used for producing liquors. Although it makes no difference between top fermented yeast and bottom fermented yeast, bottom fermented yeast is preferred since it is easily applied to large-scale brewing equipment.

The yeast may be inoculated after the alcohols have been added to and mixed with the fermentation raw material liquid, or the alcohols may be added to and mixed with the fermentation raw material liquid inoculated with the yeast. The alcohols may be added after the fermetation raw material liquid has been inoculated with the yeast, followed by the fermentation. Furthermore, as described above, the fermentation may be started by mixing the alcohols with part of the fermentation raw material liquid, inoculating yeast into the remaining fermentation raw material liquid, and mixing both of them.

Furthermore, as the maturation process, the resultant fermented liquid is aged in a maturation tank and stored under a low-temperature condition of about 0°C to be stabilized. Thereafter, as the filtration process, the fermented liquid after maturation is filtered to remove the yeast, insoluble proteins and the like in this temperature range, thereby making it possible to obtain the intended fermented beer-like alcoholic beverage. This filtration treatment may be any method as long as it can remove the yeast by filtration, such as diatomaceous filtration, and filter filtration by a filter with an average pore size of about 0.4-0.6 µm.

In the method of producing a fermented beverage, the addition of the alcohols before completion of fermentation or after completion of fermentation can produce a fermented beverage having a high alcohol concentration even if the amount of fermentation raw materials to be used is small. That is, by using the method of producing a fermented beverage according to the present invention, even if the amount of fermentation raw materials to be used is suppressed so that the digestible-carbohydrate concentration in the final product is less than 0.5 g/100 mL, a fermented beer-like alcoholic beverage having a sufficiently high alcohol concentration of 4-10 vol% can be produced.

The beer-like beverage of the present invention is a beer-like beverage containing ferulic acid in a specific amount. The amount of ferulic acid in the beer-like beverage of the present invention is 0.4-10 ppm (w/v) in concentration. When the amount of ferulic acid is less than 0.4 ppm in concentration, the resistance to the throat becomes insufficient, whereas when it is more than 10 ppm, a balance of flavors may become worse. The amount of ferulic acid in the beer-like beverage of the present invention is preferably 0.4-3.2 ppm in concentration, and more preferably 0.5-1.6 ppm in concentration.

Ferulic acid is a low-molecular compound. Therefore, even if it is contained, a small amount does not decrease the fluidity of the solution. The resistance to the throat of the beer-like beverage of the present invention is a sensation mainly perceived in the front of the throat, roughly in the vicinity of the uvula. There is no example in which ferulic acid has exerted an effect at such a low concentration, and the details are unknown. However, since it is a response whose action site is in an oral cavity, this is presumed to be a phenomenon caused by stimulating the taste, and is considered to be a sensation achieved by becoming more difficult for it to pass through the throat when swallowing.

The amount of ferulic acid in the beer-like beverage can be measured, for example, by using a high-performance liquid-chromatography (HPLC) analysis method. For example, a sample obtained by ice-cooling a beer-like beverage followed by degassing is injected into a HPLC device to process it. An example of measurement conditions is as follows.

**[Table 1]**

| | |
|---|---|
| HPLC Device | "LC 1200" Series manufactured by Agilent Technoloqies, Inc. |
| UV Detector | Detection wavelenqth: 340 nm |
| Column | "Inertsil ODS-4" manufactured by GL Science, Inc. |
| Mobile phase | A: 0.2% aqueous solution of trifluoroacetic acid, B: aqueous solution of 0.2% trifluoroacetic acid in methanol |
| Flow rate | Gradient at 0.3 mL/min |
| Column temperature | 40°C |
| Injection volume | 40 µl |

For example, when starch raw material is fermented to produce a beer-like beverage, the amount of ferulic acid in the beer-like beverage may be adjusted by devising brewing conditions such as using malt as the starch raw material. The amount of ferulic acid in the beer-like beverage may also be adjusted by adding food or a food additive, which contains ferulic acid, to the beer-like beverage.

### [Examples]

Next, the present invention will be described in more detail by showing Examples and Reference Examples. However, it should not be construed that the present invention is limited to the following Examples and the like. Ferulic acid concentrations described in Examples and Reference Examples were measured by a method described in the detailed description of the invention.

### <Example 1>

*Happoshu* (A beer-like fermented malt beverage ("ASAHI OFF" (trade name) manufactured by ASAHI BREWERIES, LTD.) made from malt extract, hops, sugars, a caramel coloring, dietary fiber, soybean protein, a seasoning (amino acid) and spirits (barley) as raw materials) was obtained from the market. The digestible-carbohydrates of this beer-like alcoholic beverage are less than 0.5 g/100 mL, and the alcohol content is 3% (v/v). This served as a control plot of Example 1. An appropriate amount of a food additive, ferulic acid (manufactured by TSUNO CO., LTD.) was added to the beverage of the control plot, to adjust the ferulic acid concentration (ppm (w/v)) of the beer-like fermented malt beverages, to amounts shown in Table 2. Ferulic acid which has been dissolved in ethanol to have a concentration of 10000 ppm (w/v) was added.

Sensory tests of the obtained beer-like fermented malt beverages were conducted in the following manner. That is, six panelists expert in beers tasted the beer-like fermented malt beverages, and scored the resistance to the throat and balance as a beer. For scoring criteria, the following evaluation axis was adopted. An average value of the six scores was adopted as an evaluation score.

The resistance to the throat is referred to a feeling of fullness, or a feeling of catching that the front of the throat feels when swallowing nutrients.

### Evaluation Axis: 1 (weak) -2 (a little weak) -3 (equivalent to control) -4 (a little strong) -5 (strong)

When the evaluation score was 3.5 or more, it was evaluated that the resistance to the throat has increased.

The balance as a beer means that the flavor is harmonious, and that it is easy to drink.

### Evaluation Axis: 1 (poor) -2 (a little poor) -3 (equivalent to control) -4 (a little good) -5 (good)

When the evaluation score was 3.5 or more, it was evaluated that the balance as a beer has improved.

Furthermore, the panelists' comments regarding senses are summarized. Numerical values in the column show the numbers of those who pointed out the senses. The results are shown in Table 2.

**[Table 2]**

| Test Plot | Control Plot | Test Plot 1 | Test Plot 2 | Test Plot 3 | Test Plot 4 | Test Plot 5 | Test Plot 6 |
|---|---|---|---|---|---|---|---|
| Ferulic acid concentration (ppm) | 0.1 | 0.2 | 0.4 | 0.8 | 3.2 | 10 | 1.6 |
| Intensity of resistance to throat | 3.0 | 3.2 | 4.0 | 4.3 | 4.5 | 4.5 | 4.0 |
| Balance as beer | 3.0 | 3.0 | 3.8 | 4.3 | 3.5 | 2.3 | 4.0 |
| Comments | | | | Richness | Tobacco, stimulation, astringency | Tobacco, remaining in throat 2, itchiness 2 | Richness, catching |

It was observed that ferulic acid increased the resistance to the throat starting from an extremely low concentration of 0.4 ppm. When the amount of ferulic acid became too large, a feeling of remaining in the throat grew, and a balance of beer-like flavors became worse.

### <Example 2>

An unfermented beer-like refreshing beverage containing dietary fiber, soybean peptides, hops, a flavoring, an acidulant, a caramel coloring, ascorbic acid, and acesulfame potassium was prepared. To this was added a food additive, ferulic acid (manufactured by TSUNO CO., LTD.) to obtain beer-like refreshing beverages with ferulic acid concentrations of 0.1 ppm (Control Plot A) and 0.8 ppm (Test Plot A).

A beer-like fermented malt beverage that was the same as the control plot of Example 1 (digestible-carbohydrate concentration of less than 0.5 g/100 mL, alcohol content of 3%) was obtained from the market. Raw material alcohol was added to the beer-like fermented malt beverage to adjust the alcohol concentration of the beer-like fermented malt beverage to amounts shown in Tables 3 and 4. These served as Control Plots B-G.

A food additive, ferulic acid (manufactured by TSUNO CO., LTD.) was added to a control beverage to adjust the ferulic acid concentration of the beer-like fermented malt beverage to 0.8 ppm. In the same manner as in Example 1, the resistance to the throat of the obtained beverages was evaluated. The results are shown in Tables 3, 4 and 5. A comparison was made on each pair with the same alcohol content. That is, for example, Control Plot A was compared with Test Plot A, and Control Plot B was compared with Test Plot B.

**[Table 3]**

| Test Plot | Control Plot A | Test Plot A | Control Plot B | Test Plot B | Control Plot C | Test Plot C |
|---|---|---|---|---|---|---|
| Digestible-carbohydrate concentration (g/100 mL) | Less than 0.5 | Less than 0.5 | Less than 0.5 | Less than 0.5 | Less than 0.5 | Less than 0.5 |
| Alcohol content (%) | 0 | 0 | 3 | 3 | 4 | 4 |
| Ferulic acid concentration (ppm) | 0.1 | 0.8 | 0.1 | 0.8 | 0.1 | 0.8 |
| Intensity of resistance to throat | 3.0 | 4.2 | 3.0 | 4.3 | 3.0 | 4.5 |
| Comments | | Bitterness stimulation | | | | |

**[Table 4]**

| Test Plot | Control Plot D | Test Plot D | Control Plot E | Test Plot E | Control Plot F | Test Plot F |
|---|---|---|---|---|---|---|
| Digestible-carbohydrate concentration (g/100 mL) | Less than 0.5 | Less than 0.5 | Less than 0.5 | Less than 0.5 | Less than 0.5 | Less than 0.5 |
| Alcohol content (%) | 6 | 6 | 9 | 9 | 11 | 11 |
| Ferulic acid concentration (ppm) | 0.1 | 0.8 | 0.1 | 0.8 | 0.1 | 0.8 |
| Intensity of resistance to throat | 3.0 | 4.5 | 3.0 | 4.3 | 3.0 | 3.0 |
| Comments | | Cold sensation | | Alcohol sensation | | Could not be sensed, alcohol is too strong |

**[Table 5]**

| Test Plot | Control Plot G | Test Plot G |
|---|---|---|
| Digestible-carbohydrate concentration (g/100 mL) | Less than 0.5 | Less than 0.5 |
| Alcohol content (%) | 10 | 10 |
| Ferulic acid concentration (ppm) | 0.1 | 0.8 |
| Intensity of resistance to throat | 3.0 | 3.7 |
| Comments | | |

It was observed that ferulic acid had an effect of enhancing the resistance to the throat of the beer-like fermented malt beverage in a specific range of alcohol concentration.

### <Example 3>

Ferulic acid has a carboxyl group and a phenolic hydroxyl group, and is known as an antioxidant. Therefore, commonly used antioxidants and acidulants were prepared, and whether the similar effect can be obtained or not was tested. The antioxidants and the acidulants to be compared were as follows:

**[Table 6]**

| | |
|---|---|
| Ascorbic acid (manufactured by Watanabe Chemical Co., Ltd.) | Antioxidant |
| Citric acid (manufactured by FUSO CHEMICAL CO., LTD.) | Acidulant |
| Phosphoric acid (manufactured by RASA CO., LTD.) | 85% Phosphoric acid, added 0.8 ppm as 100% phosphoric acid, acidulant |
| Polyphenol ("Sunphenon BG-3" (trade name) manufactured by Taiyo Kagaku Co., Ltd.) | 80% or higher Polyphenol, added 0.8 ppm as 100% polyphenol, an example of a substance having a phenolic hydroxyl group |

A beer-like fermented malt beverage (digestible-carbohydrate concentration of less than 0.5 g/100 mL, alcohol content of 3%) that was the same as a Reference Example was obtained from the market. Raw material alcohol was added to the beer-like fermented malt beverage to adjust the alcohol concentration of the beer-like fermented malt beverage to 4%, thus serving as a additive-free plot. In an addition plot; a food additive, ferulic acid (manufactured by TSUNO CO., LTD.) and additives in Table 6 were added to adjust the additive concentrations of the beer-like fermented malt beverages to 0.8 ppm.

In the same manner as in Example 1, the resistance to the throat and balance as a beer of the obtained beverages were evaluated. Using a pH meter "F-72" (trade name) manufactured by HORIBA, Ltd., pHs of the beer-like fermented malt beverages were measured. The results are shown in Table 7.

**[Table 7]**

| Additive Type | Additive free | Ferulic acid | Ascorbic acid | Citric acid | Phosphoric acid | Polyphenol |
|---|---|---|---|---|---|---|
| Ferulic acid concentration (ppm) | 0.1 | 0.8 | 0.8 | 0.8 | 0.8 | 0.8 |
| Intensity of resistance to throat | 3.0 | 4.3 | 2.8 | 2.8 | 2.8 | 3.0 |
| Balance as beer | 3.0 | 4.5 | 3.0 | 2.7 | 2.7 | 2.3 |
| Comments | | Stimulation | | Acidity 3 | Mild, acidity 3 | Bitterness, acridity remains, astringency 2 |
| pH | 3.8 | 3.8 | 3.8 | 3.8 | 3.8 | 3.8 |

Among the commonly used additives, an effect of enhancing the resistance to the throat in the beer-like fermented malt beverage was observed particularly for ferulic acid.

### <Example 4>

A beer-like fermented malt beverage that was the same as the control plot of Example 1 (digestible-carbohydrate concentration of less than 0.5 g/100 mL, alcohol content of 3%) was obtained from the market. Raw material alcohol was added to the beer-like fermented malt beverage to adjust the digestible-carbohydrate concentration of the beer-like fermented malt beverage to 6%, and hydrolysates of starch with a DE of 11.8 ("Pindex #2" (trade name) manufactured by Matsutani Chemical industry, Co., Ltd.) were added to adjust the digestible-carbohydrate concentrations as shown in Table 8. Pinedex #2 was added as an aqueous solution, whose concentration had been adjusted as needed so that the volume to be added to each sample was the same. These served as control beverages of Example 4.

A food additive, ferulic acid (manufactured by TSUNO CO., LTD.) was added to control beverages to adjust the ferulic acid concentration of the beer-like fermented malt beverage to 0.4 ppm. In the same manner as in Example 1, a sensation of alcohol stimulation and balance as a beer of the obtained beverages were evaluated. A comparison was made on each pair with the same digestible-carbohydrate concentration.

That is, for example, a beverage in which ferulic acid was added to a control beverage with a digestible-carbohydrate concentration of 0.3% was compared as a test beverage with a control beverage with a digestible-carbohydrate concentration of 0.3%. The results are shown in Table 8.

**[Table 8]**

| Test Plot | Control Plot H | Test Plot H | Control Plot I | Test Plot I | Control Plot J | Test Plot J | Control Plot K | Test Plot K |
|---|---|---|---|---|---|---|---|---|
| Digestible-carbohydrate concentration (g/100 mL) | 0.3 | 0.3 | 0.8 | 0.8 | 1.6 | 1.6 | 3.2 | 3.2 |
| Ferulic acid concentration (ppm) | 0 | 0.4 | 0 | 0.4 | 0 | 0.4 | 0 | 0.4 |
| Intensity of resistance to throat | 3.0 | 4.4 | 3.0 | 4.0 | 3.0 | 3.8 | 3.0 | 3.4 |
| Balance as beer | 3.0 | 3.8 | 3.0 | 3.8 | 3.0 | 3.5 | 3.0 | 2.5 |
| Comments | | | | Going down the throat | Body | Body | Body 2 | Paper smell 3 |

It was observed that ferulic acid had an effect of enhancing the resistance to the throat of the beer-like fermented malt beverage. However, when the digestible-carbohydrate concentration is increased, the resistance to the throat attributed to digestible-carbohydrates is generated, which made it difficult to sense the effect attributed to ferulic acid.

## Claims

1. A beer-like beverage wherein the amount of ferulic acid is 0.4-10 ppm (w/v) in concentration, the amount of digestible-carbohydrates is 2.0 g/100 mL or less in concentration, and the amount of alcohol is 10% (v/v) or less in concentration.

2. The beer-like beverage according to claim 1, wherein the amount of ferulic acid is 0.4-3.2 ppm in concentration.

3. The beer-like beverage according to claim 1 or 2, wherein the amount of digestible-carbohydrates is less than 0.5 g/100 mL.

4. The beer-like beverage according to any one of claims 1-3, which includes a component obtained from grain or a component obtained from malt.

5. The beer-like beverage according to any one of claims 1-4, which is a beer-like refreshing beverage substantially not containing alcohol.

6. The beer-like beverage according to any one of claims 1-4, which includes a component obtained from a fermented product of fermentation raw materials.

7. The beer-like beverage according to any one of claims 1-4 and 6, wherein the amount of alcohol is 3% or more in concentration.
